# EUROPEAN PATENT SPECIFICATION

(11) **EP 3 248 424 B1**
(45) Date of publication and mention of the grant of the patent: **30.12.2020**
(21) Application number: 16740865.7
(22) Date of filing: 22.01.2016
(51) Int. Cl.: H04W 72/04, H04L 5/00, H04B 7/155

(54) **HIGH PERFORMANCE NLOS WIRELESS BACKHAUL FRAME STRUCTURE**
STRUKTUR FÜR HOCHLEISTUNGSFÄHIGEN DRAHTLOSEN NLOS-BACKHAULRAHMEN
STRUCTURE DE TRAME DE LIAISON SANS FIL NLOS DE PERFORMANCE ÉLEVÉE

(30) Priority: 22.01.2015 US 201562106587 P; 29.06.2015 US 201514753099
(43) Date of publication of application: 29.11.2017
(73) Proprietor: Texas Instruments Incorporated, Dallas, TX 75265-5474 (US)
(72) Inventor: BERTRAND, Pierre, 06600 Antibes (FR); ROH, June Chul, Allen, TX 75013 (US); YAO, Jun, Pudong Shanghai 200129 (CN)
(74) Representative: Zeller, Andreas
(86) International application number: PCT/US2016/014596
(87) International publication number: WO 2016/118905

(56) References cited:
- EP-A2- 1 915 005
- WO-A1-2010/138925
- WO-A1-2014/098700
- WO-A2-2010/122419
- US-A1- 2008 165 709
- US-A1- 2014 071 954
- US-A1- 2014 362 701

## Description

### BACKGROUND

This relates generally to wireless communication systems, and more particularly to transmission of a Non-Line-Of-Sight (NLOS) backhaul frame structure compatible with a time-division duplex long term evolution (TD-LTE) Radio Access Network (RAN).

It is a common understanding that a key answer to the huge data demand increase in cellular networks is the deployment of small cells providing Long Term Evolution connectivity to a smaller number of users than the number of users typically served by a macro cell. This allows both providing larger transmission/reception resource opportunities to users as well as offloading the macro network. However, although the technical challenges of the Radio Access Network (RAN) of small cells have been the focus of considerable standardization effort through 3GPP releases 10-12, little attention was given to the backhaul counterpart. It is a difficult technological challenge, especially for outdoor small cell deployment where wired backhaul is usually not available. This is often due to the non-conventional locations of small cell sites such as lamp posts, road signs, bus shelters, etc., in which case wireless backhaul is the most practical solution.

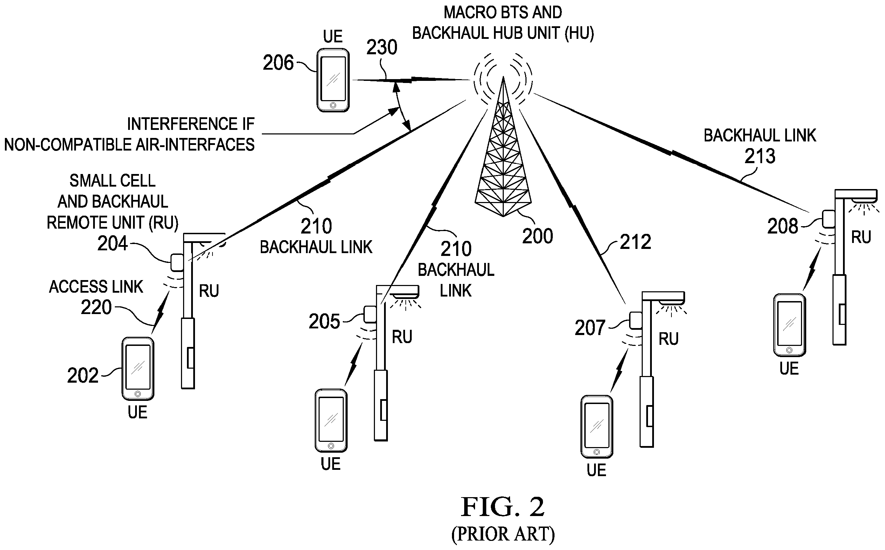

The LTE wireless access technology, also known as Evolved Universal Terrestrial Radio Access Network (E-UTRAN), was standardized by the 3GPP working groups. OFDMA and SC-FDMA (single carrier FDMA) access schemes were chosen for the DL and UL of E-UTRAN, respectively. User equipments (UEs) are time and frequency multiplexed on a physical uplink shared channel (PUSCH) and a physical uplink control channel (PUCCH), and time and frequency synchronization between UEs guarantees optimal intra-cell orthogonality. The LTE air-interface provides the best spectral-efficiency and cost trade-off of recent cellular networks standards, and as such, has been vastly adopted by operators as the unique 4G technology for the Radio Access Network (RAN), making it a robust and proven technology. As mentioned above and shown at FIG. 2, the tendency in the RAN topology is to increase the cell density by adding small cells in the vicinity of a legacy macro cell. The cellular macro site 200 hosts a macro base station. Macro site 200 also hosts a co-located small cell base station and wireless backhaul hub unit (HU). Macro site 200 has small cell sites 204, 205, 207, and 208 under its umbrella, where each small cell site also hosts a co-located small cell base station and wireless backhaul remote unit (RU). Macro site 200 communicates with small cell sites 204, 205, 207, and 208 through a point-to-multipoint (P2MP) wireless backhaul system deploying radio links 210, 211, 212, 213. The base station of macro site 200 communicates directly with UE 206 over RAN link 230. UE 202, however, communicates directly with the small cell base station of small cell site 204 over a RAN access link 220. The RU of small cell site 204, in turn, communicates directly with the HU of macro cell site 200 over a RAN backhaul link 210. This may cause significant intercell interference between access link 220 and backhaul link 210 as well as between backhaul link 210 and access link 230 if both share the same frequency resources, as is the case in a RAN with backhaul frequency reuse 1 scenario.

As backhaul link density increases with multiple RUs, the difference between RAN and backhaul wireless channels decreases. This calls for a point-to-multipoint backhaul topology as shown in FIG. 2. As a result, conventional wireless backhaul systems typically employing single carrier waveforms with time domain equalization (TDE) techniques at the receiver, become less practical in these environments due to their limitation to be operating in point-to-point line-of-sight (LOS) channels, e.g., in 6 - 42 GHz microwave frequency band. In addition this spectrum is already saturated with existing backhaul traffic, so that higher frequencies such as E-band and V-band have become very attractive for such types of links. However, these bands also come with their specific technical challenges such as high sensitivity to environmental conditions and require very tight beam pointing and tracking in operation. They are not presently mature enough to provide the level of robustness, flexibility and low-cost requirements of small cell backhaul deployments. On the contrary, the similarities between the small cell backhaul and small cell access topologies P2MP and wireless radio channel NLOS naturally lead to use a very similar air interface.

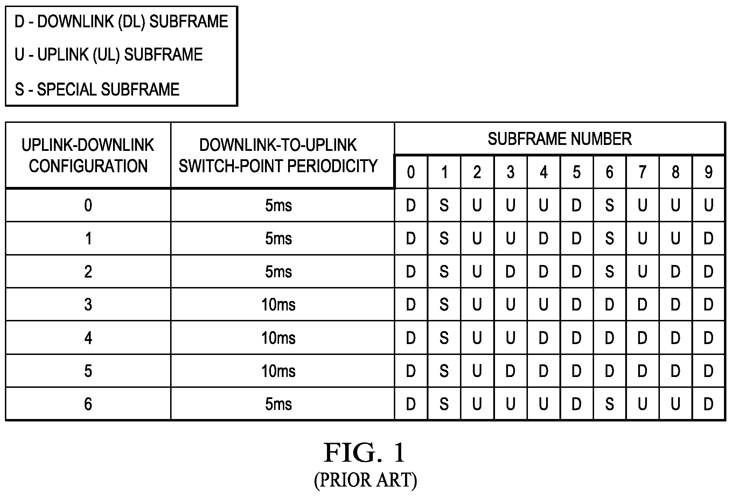

In wireless systems such as LTE, the base station and wireless terminal or user equipment (UE) operate respectively as a master-slave pair, wherein downlink (DL) and uplink (UL) transmission is configured or scheduled by the base station. For the LTE system, a TTI is 1 ms long and has the duration of a subframe. FIG. 1 shows the LTE TDD UL/DL subframe configurations with different UL and DL allocations to support a diverse mix of UL and DL traffic ratios or to enable coexistence between different TDD wireless systems. For example, configuration 0 may provide 8 UL subframes (U) including special subframes (S). Configuration 5 may provide 9 DL subframes (D) including the special subframe (S).

Several problems are associated with collocated time division duplex LTE (TD-LTE) RAN and backhaul links at small cell sites, such as enabling a highly integrated and cost-effective solution. These include RAN and backhaul modems in the same box or even in the same System-on-Chip (SoC), providing self-configurable RAN and backhaul link. In addition, sparse and costly spectrum leads to sharing the same bands for access and backhaul transmissions. Along these lines, In-band LTE relays were standardized as part of 3GPP release 10 but are generally unsuitable due to high latency with a 1 ms subframe TTI, high block error rates (BLER), and high overhead.

Preceding approaches provide improvements in backhaul transmission in a wireless NLOS environment, but further improvements are possible. US 2014/362701 relates to a NLOS wireless backhaul downlink communication.
WO2010/122419 A2 relates to the allocation of certain subframes within a radio frame of a TDD configuration as either DL or UL subframes for communicating on a backhaul link, wherein transmissions on the backhaul and receipt of traffic on the access link are time division multiplexed

### SUMMARY

In a first embodiment, a method of operating a wireless communication system is defined by Claim 1.

In a second embodiment, a wireless communication system is defined by Claim 13.

Further embodiments are defined by the dependent claims.

### BRIEF DESCRIPTION OF THE DRAWINGS

FIG. 1 is a diagram of conventional downlink and uplink subframe configurations.
FIG. 2 is a diagram of a conventional wireless communication system with a cellular macro site hosting a backhaul point to multipoint (P2MP) hub unit (HU) serving remote units (RUs) which relay communications between small cells and plural user equipment (UE).
FIG. 3 is a diagram of downlink and uplink subframe configurations according to example embodiments.
FIG. 4 is a diagram of a conventional subset of downlink and uplink subframe configurations.
FIG. 5A is a diagram of a subset of downlink and uplink slot configurations according to example embodiments.
FIG. 5B is a diagram of a communication system according to example embodiments.
FIG. 6 is a diagram of conventional special subframe configurations.
FIG. 7 is a diagram of a downlink (DL) slot and a special slot according to example embodiments.
FIG. 8 is a detailed diagram of a data frame as in configuration 3 (FIG. 4) showing downlink and uplink slots and a special slot.
FIG. 9 is a detailed diagram of the downlink slot of FIG. 7.
FIG. 10 is a diagram showing multiple downlink slot formats according to example embodiments.
FIG. 11 is a diagram showing multiple special slot formats according to example embodiments.
FIG. 12 is a diagram showing multiple uplink slot formats according to example embodiments.
FIG. 13 is a diagram showing Physical Downlink Shared Channel (PDSCH) generation with a single transmit antenna according to example embodiments.
FIG. 14 is a diagram showing Physical Downlink Control Channel (PDCCH) generation with a single transmit antenna according to example embodiments.

### DETAILED DESCRIPTION OF EXAMPLE EMBODIMENTS

Embodiments are directed to a NLOS Time Division Duplex (TDD) wireless backhaul design to maximize spectrum reuse. The design utilizes a 0.5 ms slot-based Transmission Time Interval (TTI) to minimize latency and 5 ms UL and DL frames for compatibility with TD-LTE. Thus, various UL/DL ratios are compatible with TD-LTE configurations (FIG. 1). This allows flexible slot assignment for multiple Remote Units (RUs). A special slot structure is disclosed which includes a Sync Signal (SS), Physical Broadcast Channel (PBCH), Pilot Signals (PS), Guard Period (GP), and Physical Random Access Channel (PRACH) as will be described in detail. These slot-based features greatly simplify the LTE frame structure, reduce cost, and maintain compatibility with TD-LTE. Example embodiments advantageously employ a robust Forward Error Correction (FEC) method by concatenating turbo code as an inner code with a Reed Solomon outer block code providing a very low Block Error Rate (BLER). Moreover, embodiments support carrier aggregation with up to four Component Carriers (CCs) per HU with dynamic scheduling of multiple RUs with one dynamic allocation per CC. These embodiments also support Semi-Persistent Scheduling (SPS) of small allocations in Frequency Division Multiple Access (FDMA) within a slot for RUs destined to convey high priority traffic, thereby avoiding latency associated with Time Division Multiple Access (TDMA) of dynamic scheduling. This combination of TDMA dynamic scheduling and FDMA SPS provides optimum performance with minimal complexity.

Some of the following abbreviations are used throughout the instant specification.
BLER: Block Error Rate
CQI: Channel Quality Indicator
CRS: Cell-specific Reference Signal
CSI: Channel State Information
CSI-RS: Channel State Information Reference Signal
DCI: DownLink Control Information
DL: DownLink
DwPTS: Downlink Pilot Time Slot
eNB: E-UTRAN Node B or base station or evolved Node B
EPDCCH: Enhanced Physical Downlink Control Channel
E-UTRAN: Evolved Universal Terrestrial Radio Access Network
FDD: Frequency Division Duplex
HARQ: Hybrid Automatic Repeat Request
HU: (backhaul) Hub Unit
ICIC: Inter-cell Interference Coordination
LTE: Long Term Evolution
MAC: Medium Access Control
MIMO: Multiple-Input Multiple-Output
MCS: Modulation Control Scheme
OFDMA: Orthogonal Frequency Division Multiple Access
PCFICH: Physical Control Format Indicator Channel
PDCCH: Physical Downlink Control Channel
PDSCH: Physical Downlink Shared Channel
PRB: Physical Resource Block
PRACH: Physical Random Access Channel
PS: Pilot Signal
PUCCH: Physical Uplink Control Channel
PUSCH: Physical Uplink Shared Channel
QAM: Quadrature Amplitude Modulation
RAR: Random Access Response
RE: Resource Element
RI: Rank Indicator
RRC: Radio Resource Control
RU: (backhaul) Remote Unit
SC-FDMA: Single Carrier Frequency Division Multiple Access
SPS: Semi-Persistent Scheduling
SRS: Sounding Reference Signal
TB: Transport Block
TDD: Time Division Duplex
TTI: Transmit Time Interval
UCI: Uplink Control Information
UE: User Equipment
UL: UpLink
UpPTS: Uplink Pilot Time Slot

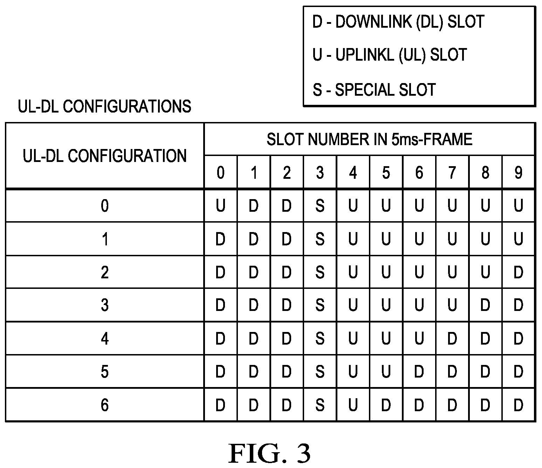

FIG. 3 shows the TDD frame structure, with seven UL/DL frame configurations, thus supporting a diverse mix of UL and DL traffic ratios. In one embodiment, this frame structure is utilized to generate an NLOS backhaul link 210 of FIG. 2. However, example embodiments may be used to generate any kind of communication link sharing similar co-existence with TD-LTE and performance requirements as the NLOS backhaul link. As a result, without loss of generality the frame structure and associated components (slots, channels, etc...) are referred to as "NLOS backhaul" or simply "NLOS" frame, slots, channels, etc.

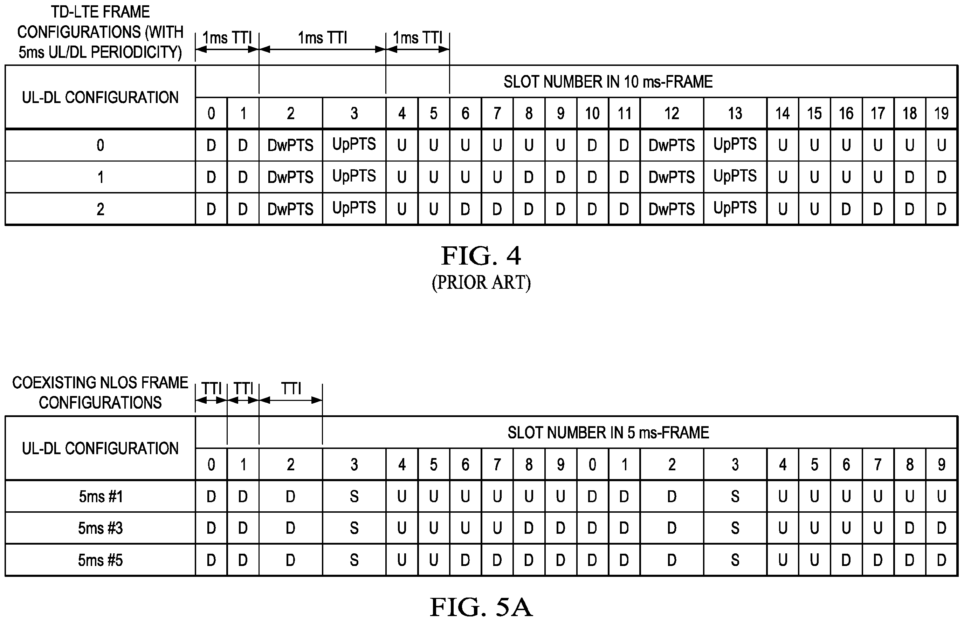

Referring to FIG. 4, the frame structure of a conventional 10 ms TD-LTE frame will be compared to a 5 ms TDD frame (FIG. 5A). FIG. 4 is a more detailed view of UL/DL frame configurations 0-2 as shown at FIG. 1. FIG. 5A is a more detailed view of UL/DL frame configurations 1, 3 and 5 as shown at FIG. 3. The frame of FIG. 4 is divided into ten subframes, each subframe having a 1 ms TTI. Each subframe is further divided into two slots, each slot having a 0.5 ms duration. Thus, twenty slots (0-19) are in each TD-LTE configuration. A D in a slot indicates it is a downlink slot. Correspondingly, a U in a slot indicates it is an uplink slot. Time slots 2 and 3 constitute a special subframe allowing transitioning from a DL subframe to an UL subframe. DwPTS and UpPTS indicate downlink and uplink portions of the special subframe, respectively.

By comparison, the frames of FIGS. 3 and 5A have a 5 ms duration and are slot based rather than subframe based. Each frame has ten (0-9) slots. Each slot has a 0.5 ms duration. As with the frame of FIG. 4, D indicates a downlink slot, and U indicates it is an uplink slot. In each of the three UL/DL configurations of FIG. 5A, however, slots 3 of both frames include a special slot indicated by an S, rather than the special subframes in slots 2-3 and 12-13 of FIG. 4. This fixed location of the special slot assures compatibility with TD-LTE frames. It advantageously permits always finding an NLOS UL/DL configuration that is 100% compatible with any 5 ms period TD-LTE UL/DL subframe configuration. For example, this prevents an NLOS backhaul DL transmission from interfering with a TD-LTE RAN UL transmission on an access link when both operate on the same frequency. In other words, it advantageously prevents the transmitter at macro cell site 200 of one system from interfering with the receiver of a co-located system.

The frame configurations of FIG. 5A have several features in common with the frame configurations of FIG. 4 to assure compatibility when operating at the same frequency. Both frames have 0.5 ms slot duration with seven SC-FDMA symbols and a normal cyclic prefix (CP) in each slot. The SC-FDMA symbol duration is the same in each frame. Both frames have the same number of subcarriers for respective 5 MHz, 10 MHz, 15 MHz, and 20 MHz bandwidths, and both have 15 kHz subcarrier spacing. Both frames use the same resource element (RE) definition and support 4, 16, and 64 QAM encoding.

The frame configuration of FIG. 5A has several unique features. The symbols of each slot are primarily SC-FDMA for both UL and DL. The first SC-FDMA symbol of each slot includes a pilot signal (PS) to improve system latency. A cell-specific sync signal (SS) different from the PS is included in each frame for cell search and frame boundary detection.

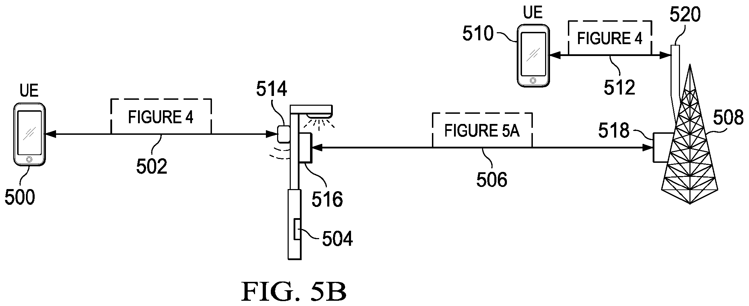

FIG. 5B shows a communication system according to example embodiments. The communication system includes a small cell site 504 and a macro cell site 508. The small cell site 504 includes a small cell BTS 514 which communicates over LTE link 502 with legacy UE 500 according to the frame structure of FIG. 4. The communication system further includes backhaul hub unit (HU) 518 which may be collocated with a Macro BTS or base station 520 at the macro cell site 508. Alternatively, the HU may communicate with the Macro BTS by a separate wireless link. Remote unit (RU) 516 is co-located with small cell BTS 514 at small cell site 504 and communicates over backhaul link 506 with HU 518 according to the frame structure of FIG. 5A. Uplink (UL) transmissions from RU 516 to HU 518 are transmitted synchronously with UL transmissions from UE 510 to Macro BTS 520. The synchronous transmissions are aligned at frame boundaries and use the same single carrier center frequency of the operating bandwidth. UL transmissions from UE 510 to Macro BTS 520 are transmitted over LTE link 512 with the frame structure of FIG. 4. UL transmissions from RU 516 to HU 518 are transmitted over backhaul link 506 with the frame structure of FIG. 5A. Likewise, Downlink (DL) transmissions from HU 518 to RU 516 are transmitted synchronously with DL transmissions from Macro BTS 520 to UE 510. The synchronous transmissions are aligned at frame boundaries and use the same single carrier center frequency of the operating bandwidth. DL transmissions from Macro BTS 520 to UE 510 are transmitted over LTE link 512 with the frame structure of FIG. 4. DL transmissions from HU 518 to RU 516 are transmitted over backhaul link 506 with the frame structure of FIG. 5A.

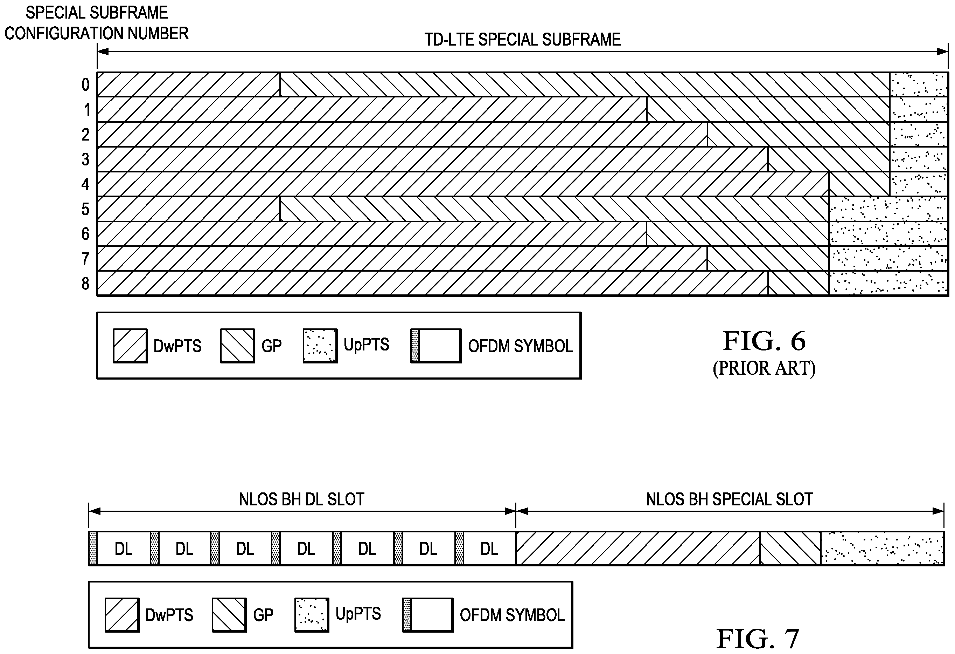

FIG. 6 shows nine (0-8) 1 ms TD-LTE special subframe configurations. FIG. 7 is a diagram of a 0.5 ms NLOS DL backhaul (BH) slot concatenated with a 0.5 ms NLOS special slot. The NLOS special slot includes a DwPTS, a UpPTS, and a guard period to achieve the 0.5 ms duration. As shown, UL and DL transmissions of the NLOS backhaul slots always coincide with UL and DL transmissions of the TD-LTE slots, irrespective of the TD-LTE special subframe configuration. Specifically, the DwPTS of the TD-LTE special subframe occurs simultaneously with the DL slot preceding the special slot of the NLOS frame and overlaps with the DwPTS of the NLOS special slot. Similarly, the UpPTS of the TD-LTE special subframe occurs simultaneously with the DwPTS of the NLOS special slot. Thus, the NLOS BH special slot includes essential features of the TD-LTE special subframe to assure compatibility when operating at the same frequency. Thus, the NLOS frame and special slot structure allows LTE access and backhaul transmission at the same time in either UL or DL. Simultaneous transmission occurs during a TTI of UL or DL slots of FIGS. 4-5A and at the SC-FDMA symbol level in the special subframe and slot of respective FIGS. 6-7.

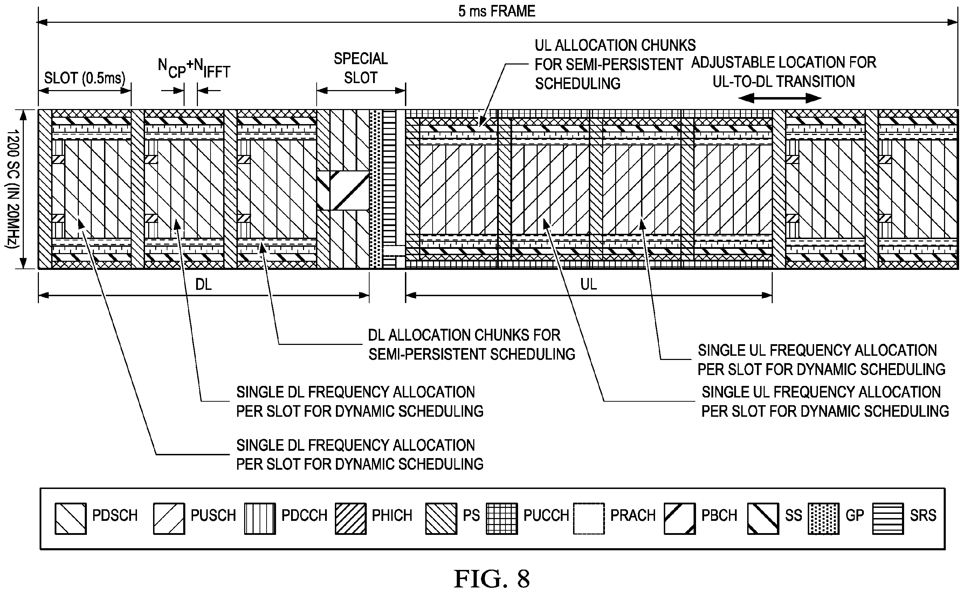

FIG. 8 is a detailed diagram of an NLOS BH frame as shown in UL/DL configuration 3 of FIG. 5. Here and in the following discussion, the vertical axis of the diagram indicates frequencies of component carriers, and the horizontal axis indicates time, where each slot has 0.5 ms duration. For example, a slot having a 20 MHz bandwidth includes 1200 subcarriers (SC) having a carrier spacing of 15 kHz. The frame includes DL slots, a special slot, and UL slots. Each DL and UL slot has seven respective single carrier frequency division multiple access (SC-FDMA) symbols. Each symbol is indicated by a separate vertical column of the slot.

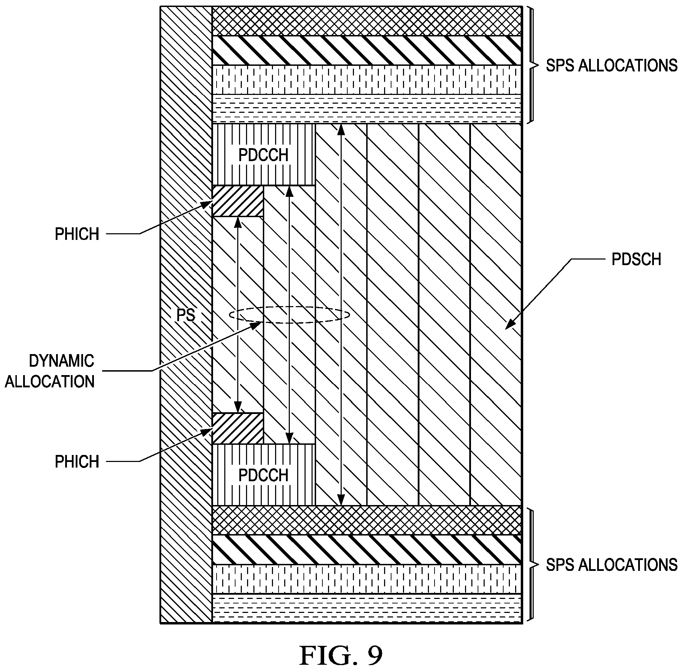

FIG. 9 is a detailed diagram of the downlink slot of FIG. 8. DL slots are used for transmitting the Physical Downlink Shared Channel (PDSCH) conveying payload traffic from the HU to the RUs. With the exception of special slots, they also contain the Physical HARQ Indicator Channel (PHICH) conveying HARQ ACK/NACK feedback to the RU. The Physical Downlink Control Channel (PDCCH) is also transmitted in this slot. The PDCCH provides the RU with PHY control information for MCS and MIMO configuration for each dynamically scheduled RU in that slot. The PDCCH also provides the RU with PHY control information for MCS and MIMO configuration for each dynamically scheduled RU in one or more future UL slots.

In order to improve the latency for high priority packets, four pairs of spectrum allocations at both ends of the system bandwidth may be assigned to different RUs, where the frequency gap between the two allocation chunks of a pair is the same across allocation pairs. The resource allocation is done in a semi-persistent scheduling (SPS) approach through a dedicated message from higher layers in the PDSCH channel. The size of each SPS allocation pair is configurable depending on expected traffic load pattern. For example, no physical resource blocks (PRBs) are allocated for SPS transmission when there is no SPS allocation. With greater expected traffic, either two (one on each side of the spectrum) or four (two on each side of the spectrum) PRBs may be allocated. Each RU may have any SPS allocation or multiple adjacent SPS allocations. In one embodiment, all four SPS allocation pairs are the same size. Most remaining frequency-time resources in the slot, except for PS, PDCCH, PHICH, and SPS allocations, are preferably dynamically assigned to a single RU whose scheduling information is conveyed in the PBCH.

Similar to LTE, in order to minimize the complexity, all allocation sizes are multiples of PRBs (12 subcarriers) and are restricted to a defined size set. The only exception is for SPS allocations that may take the closest number of sub-carriers to the nominal targeted allocation size (2 or 4 PRBs). This minimizes the wasted guard bands between SPS and the PDSCH or PUSCH.

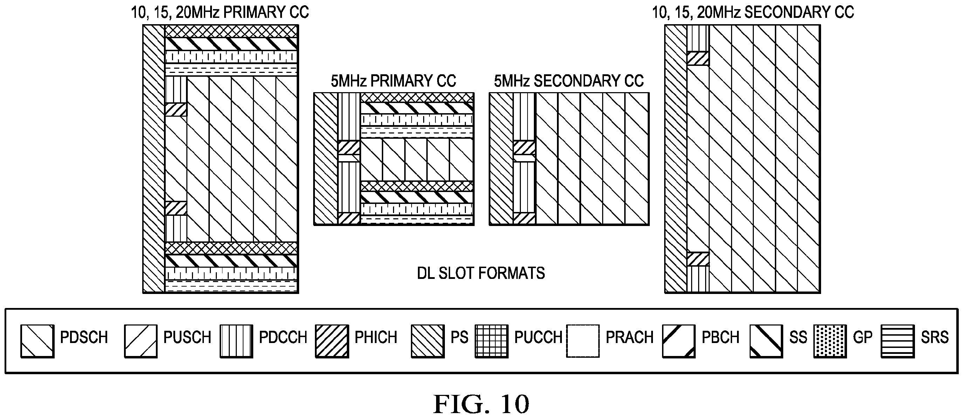

FIG. 10 illustrates various DL slot formats for different component carriers (CCs). A significant improvement with respect to LTE is that dynamic allocation sizes of the PDSCH vary across SC-FDMA symbols and are adjusted to fit within the control channels frequency multiplexed in the same symbol. A transport block carrying user data in a slot is mapped into consecutive SC-FDMA data symbols of the slot. This is different from LTE in that the mapping is done across SC-FDMA symbols of different sizes. This advantageously maximizes use of all remaining resource elements and improves spectral efficiency. In a system with 10, 15 or 20 MHz primary CC, SPS allocation starts from the second SC-FDMA symbol in the slot. In a system with 5 MHz primary CC, SPS allocation starts from the third SC-FDMA symbol in the slot. SPS allocation is only applied to the primary CC, and no SPS allocation is allocated in a secondary CC. Other than this difference, DL slots have the same format for primary and secondary CCs.

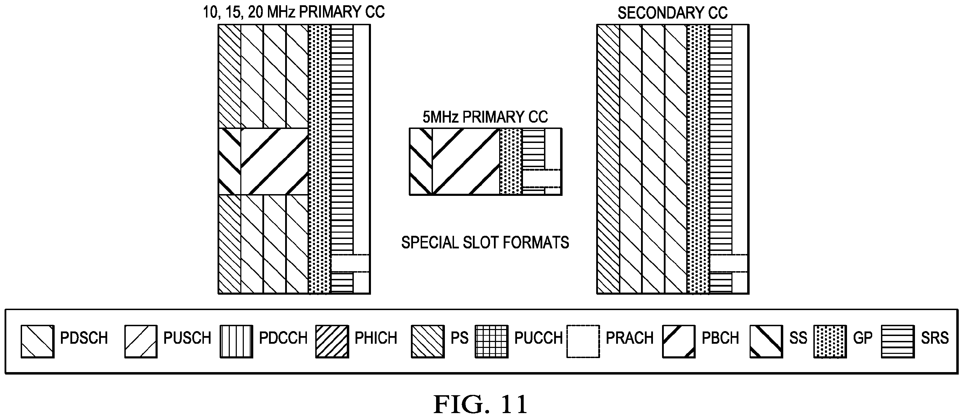

FIG. 11 is a diagram of various special slot formats for different component carriers (CCs) and system bandwidths. RUs are UL synchronized to the HU. As a result, a guard time is required on every DL-to-UL transition. The frame structure reuses for that purpose the special subframe concept of the TD-LTE frame, adapted to a special slot. The special slot includes DwPTS in SC-FDMA symbols 0-3, a guard period (GP) in SC-FDMA symbol 4, and UpPTS in SC-FDMA symbols 5-6. As previously discussed, the DwPTS and UpPTS of the NLOS special slot occur at the same time as DwPTS and UpPTS transmissions of a TD-LTE special subframe, thereby preventing a transmitter of one system from interfering with a receiver of another co-located system. The UpPTS is for short Physical Random Access Channel (PRACH) and sounding reference signal (SRS) transmission from the RUs. PRACH channels may occur every other special slot or could have an even lower density such as 0.1 or 0.01 and may be based on system frame number. Information on PRACH configuration is broadcast via PBCH. PRACH is used at the HU for measurement for initial timing adjustment during initial link setup procedure. SRSs are used for CSI estimation and timing offset estimation. The PHY information (MCS and MIMO configuration) for the DwPTS is conveyed in the PDCCH of the previous DL slot. As a result, PDCCH is not needed in a special slot. Also for simplicity, the special slot does not contain any SPS allocation. SC-FDMA symbol 0 of DwPTS is a pilot signal (PS) frequency multiplexed with the synchronization signal (SS) in the primary CC. There is no SS in the secondary CC. SC-FDMA symbols 1-3 carry the Physical Broadcast Channel (PBCH) and also the PDSCH when system bandwidth is greater than 5 MHz. The PBCH provides the RU with System information and RU slot allocation information for the next frame, for all CCs. The PBCH occupies the center 300 subcarriers and is multiplexed in FDMA with the PDSCH. The PBCH is transmitted on the primary CC only. As a result, on secondary CCs, SC-FDMA symbols 1-3 are all used to carry the PDSCH. SC-FDMA symbol 0 in a primary CC carries a synchronization signal (SS) for cell search/detection and initial synchronization of a primary CC. The SS is allocated the same tones as PBCH and is frequency multiplexed with the PS in SC-FDMA symbol 0.

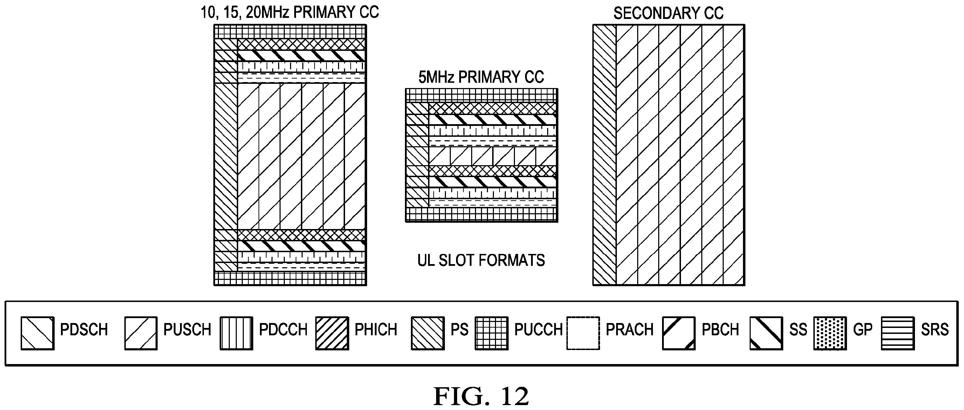

FIG. 12 is a diagram of various UL slot formats for different component carriers (CCs). UL slots are used for transmitting the Physical Uplink Shared Channel (PUSCH) conveying payload traffic from the RU to the HU. SC-FDMA symbol 0 of the PUSCH is a pilot symbol (PS). The Physical Uplink Control Channel (PUCCH) is also transmitted in this slot, in the primary CC only. The PUCCH carries HARQ ACK/NACK feedback, Channel Quality Indicators (CQIs), a Rank Indicators (RIs), and Scheduling Requests (SRs) from the RUs for all CCs. The PUCCH occupies both edges of the slot bandwidth and is multiplexed in FDMA with the PUSCH. The PUCCH occupies up to 8 PRBs. Similar to the DL slots, SPS allocation is employed in the UL slots of the primary CC as well. A pair of spectrum allocations at both ends of the system bandwidth may be assigned to each RU in each UL slot. The resource allocation is done in a semi-persistent scheduling (SPS) approach. The remaining majority of frequency-time resources in the slot (excluding PS, PUCCH, SPS allocations) are dynamically assigned to a single RU in a TDMA way, whose scheduling information is conveyed in the PBCH.

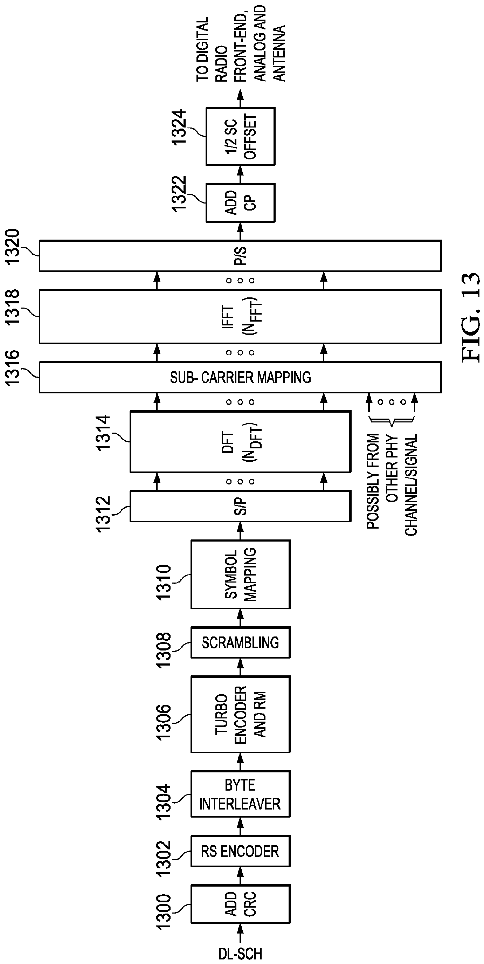

FIG. 13 is a block diagram illustrating Physical Downlink Shared Channel (PDSCH) generation for an exemplary wireless system with a single transmit antenna. On a PDSCH, one transport block is transmitted per stream per TTI, and in 2x2 MIMO system where 2 data streams can be transmitted, 2 transport blocks are transmitted in parallel. A 24-bit CRC 1300 is added on each transport block using CRC-24A of LTE. No cyclic redundancy check (CRC) is added to an FEC block (Turbo + RS). There is no Turbo code CRC. Early termination is not provisioned in Turbo decoding. One CRC-added transport block corresponds to integer number of forward error correction (FEC) blocks, where FEC means concatenated Turbo and RS codes. And in one FEC block there is an integer number of Turbo blocks and an integer number of Reed-Solomon (RS) blocks 1302. For example, one transport block after CRC may be mapped to two FEC blocks and each FEC block may have 3 Turbo blocks and 6 RS blocks. The CRC-added transport block is encoded by a RS encoder such as RS(255, 255-2T), where T is the error correction capability in bytes of the RS code. Typically a shortened RS code is used which has a form RS(255-S, 255-2T - S). For example, RS(192, 184) and RS(128, 122) may be used. In addition, for short allocations such as SPS allocations, RS code shortening is used as additional rate matching (RM) scheme on top of the Turbo code block rate matching. RS output blocks corresponding to one FEC block go through a byte interleaver 1304. The interleaved byte-symbols are used as inputs to the Turbo encoder 1306. Turbo encoding, such as the Turbo code of LTE and RM of LTE are then applied.

Bit-level scrambling 1308 is applied to the FEC encoded bit stream. For a given RU, different codes may apply to consecutive FEC blocks, and transport blocks of different layers in the same allocation, but the same code set repeats across TTIs and cell-specific code hopping applies among FEC blocks and code words across slots. This provides the benefit of enabling a simple implementation where all codes are pre-computed and stored in memory, and reused for each TTI.

For each FEC block *k* in code word *q*, the block of bits ${b}^{\left(q, k\right)} \left(0\right) , … , {b}^{\left(q.k\right)} \left({M}_{bit}^{\left(q, k\right)}-1\right) ,$ where ${M}_{bit}^{\left(q, k\right)}$ is the number of bits in FEC block *k* of code word *q* transmitted on the PDSCH, are scrambled prior to modulation, resulting in a block of scrambled bits ${{b}^{˜}}^{\left(q, k\right)} \left(0\right) , … , {{b}^{˜}}^{\left(q, k\right)} \left({M}_{bit}^{\left(q, k\right)}-1\right)$ according to ${{b}^{˜}}^{\left(q, k\right)} \left(i\right) = \left({b}^{\left(q, k\right)}\left(i\right)+{c}^{\left(q, k\right)}\left(i\right)\right) mod 2$ where the scrambling sequence *c*^{(*q*,*k*)}(*i*) is preferably a Gold sequence as is known in the art.

The scrambling sequence generator is initialized with ${c}_{init} = \left({n}_{RU}+1\right) ⋅ {2}^{14} + q ′ ⋅ {2}^{13} + k ′ ⋅ {2}^{9} + {N}_{ID}^{cell}$ at the start of each FEC block, where *n*_{RU} ∈ {0,1,2,...,7} is the RU index in the cell and ${N}_{ID}^{cell}$ is the physical layer cell identity. *k'* and *q*' are the hopping FEC block and codeword indexes given by: $k ′ = \left(k+{n}_{s}+{N}_{cell}^{ID}\right) \left(mod {N}_{FEC}^{{n}_{RU} , q , {n}_{s}}\right)$ $q ′ = \left(q+{n}_{s}+{N}_{cell}^{ID}\right) \left(mod {N}_{CW}^{{n}_{RU} , {n}_{s}}\right)$ where *n*(mod *m*) means *n* modulo *m* and:
- $k ∈ \left\{0,1,…,{N}_{FEC}^{{n}_{RU} , q , {n}_{s}}-1\right\}$ is the FEC block index;
- ${N}_{FEC}^{{n}_{RU} , q , {n}_{s}}$ is the number of FEC blocks in the transport block associated with the codeword *q,* for RU *n*_{RU} in slot *n*ₛ;
- ${N}_{CW}^{{n}_{RU} , {n}_{s}}$ is the number of codewords for RU *n*_{RU} in slot *n*ₛ;
- *n*ₛ is the slot index in the frame;
- up to two codewords can be transmitted in one slot, i.e., *q* ∈ {0,1}. In the case of single codeword transmission, *q* = 0.

After bit-level scrambling 1308, the data stream is symbol mapped 1310 and applied to serial-to-parallel converter 1312. The parallel symbols are converted to frequency domain symbols by DFT 1314 and subcarrier mapped 1316. The mapped subcarriers are then converted back to time domain by IFFT 1318 and applied to parallel-to-serial converter 1320. A cyclic prefix 1322 is added to the resulting data stream and a half-carrier frequency offset 1324 is applied.

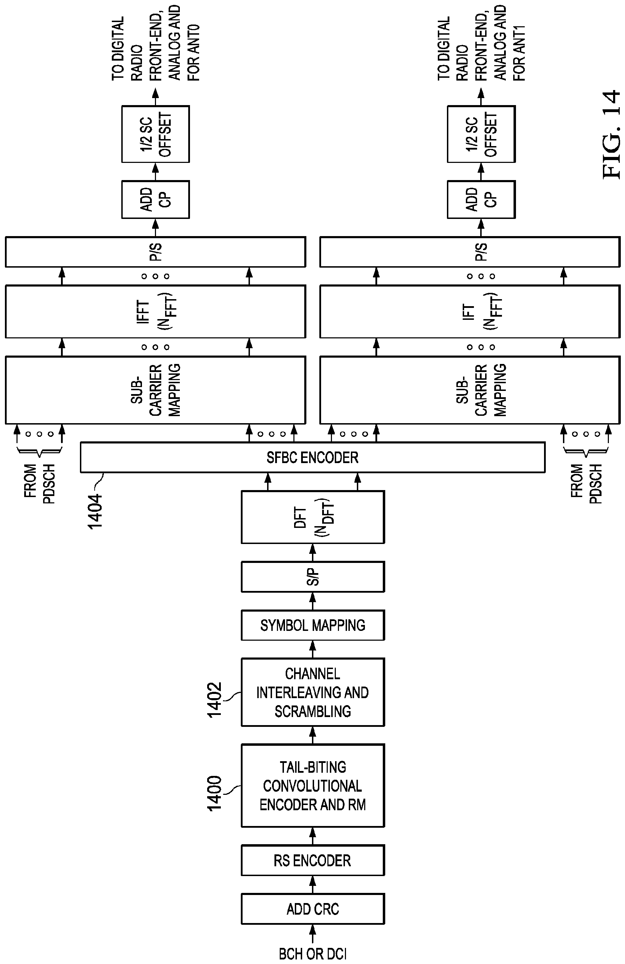

FIG. 14 is a block diagram illustrating Physical Downlink Control Channel (PDCCH) generation for an exemplary wireless system with two transmit antennas. PDCCH generation is functionally similar to the previously described PDSCH generation, so only the different blocks are discussed below. The PDCCH is used for transmitting the Downlink Control Information (DCI). The PDCCH is per link based, so each dynamic slot resource has its own PDCCH DCI and each RU has to look for PHY information in the PDCCH DCI it has been allocated by the PBCH to properly decode its downlink PHY channels and properly transmit uplink PHY channels. In particular, the PDCCH in each DL slot carries the PHY control information (MCS and MIMO configuration) for the RU dynamically scheduled in that slot. The PDCCH also carries PHY control information (MCS and MIMO configuration) for the RUs dynamically scheduled in one or more future UL slots. Finally, the PDCCH indicates potential allocation preemptions by HARQ retransmissions for both dynamic and SPS allocations.

A 16-bit CRC is added to DCI bits first, which then pass through an RS encoder with mother code RS(K_{RS}=255, N_{RS}=247) using code shortening to accommodate the small input payload. Each such RS block forms a FEC block feeding a tail-biting convolutional coding 1400 of LTE (with *R* = 1/3, *K* = 7) with rate matching. This PDCCH MCS is selected such that the required signal-to-noise ratio (SNR) for PDCCH detection with FER = 1% should be 3dB lower than that for the lower MCS of PDSCH and PUSCH so that PDCCH information is carried over to RUs in worst case scenario. The encoded bits are channel-interleaved and scrambled 1402 before they are mapped to modulation symbol. QPSK is preferred modulation format for its robustness in noisy channel. For the case of 2 transmit antennas or cross-polarization, the PDCCH is transmitted in rank-1 transmission with Alamouti-type space-frequency block code (SFBC) 1404.

Each RU uses the DL sync signal (SS) and pilot signal (PS) for signal and boundary detection, initial carrier frequency offset (CFO) estimation, initial symbol timing and tracking, and channel estimation. PS sequences are generated in the same way as in LTE. Only one base sequence is available per base sequence group, so that a total of 30 base sequences are available irrespective of the sequence length. No group hopping applies. The same base sequence is used for both UL and DL. The base sequence index 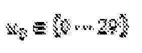 in use in the cell for PUSCH/PDSCH C/RPSs is broadcast in the PBCH. The same base sequence is used for both PUCCH and SRS, which index 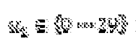 is provided by HU to each RU individually through higher layer dedicated signaling in RAR

Modifications are possible in the described embodiments, and other embodiments are possible, within the scope of the claims. Embodiments may be implemented in software, hardware, or a combination of both.

## Claims

1. A method of operating a wireless communication system, comprising:
communicating over a wireless backhaul link by a first data frame having a first transmit time interval with a first wireless transceiver; and
communicating over a wireless access link by a second data frame having a second transmit time interval different from the first transmit time interval with a second wireless transceiver, wherein the backhaul link and the access link share the same frequency resources and the first and second data frames are slot location and/or slot format compatible.

2. The method of claim 1, comprising transferring data between the first data frame and the second data frame.

3. The method of claim 1, wherein the first data frame includes a plurality of slots, each slot having the first transmit time interval and having a respective plurality of symbols, and wherein a transport block having data for a single user is mapped into consecutive symbols of a slot of the plurality of slots; optionally wherein the consecutive symbols include different respective allocation sizes.

4. The method of claim 1, wherein the first data frame includes a plurality of slots, each slot having the first transmit time interval and having a respective plurality of symbols, and wherein a first part of each symbol is a semi-persistent allocation and a second part of each symbol is a dynamic allocation.

5. The method of claim 4, wherein the semi-persistent allocation is communicated through a dedicated message in a physical data shared channel (PDSCH).

6. The method of claim 1, comprising:
communicating by the first data frame with the first wireless transceiver at a first time; and
communicating, in synchronism with the first data frame, with the second wireless transceiver at the first time by a third data frame having the second transmit time interval.

7. The method of claim 6, wherein the step of communicating by the first data frame is one of an uplink and downlink, and wherein the step of communicating, in synchronism with the first data frame, with the second wireless transceiver is said one of an uplink and downlink.

8. The method of claim 6, wherein the first and third data frame use a same frequency resource.

9. The method of claim 1, communicating within a wireless bandwidth, wherein:
the step of communicating over a wireless backhaul link further comprising: communicating by one of an uplink and downlink with the first wireless transceiver by the first data frame having the first transmit time interval at a first time using a first frequency resource of the bandwidth; and
the step of communicating over a wireless access link further comprising: communicating by said one of an uplink and downlink with the second wireless transceiver by the second data frame having the second transmit time interval different from the first transmit time interval at the first time using a second frequency resource of the bandwidth.

10. The method of claim 1, wherein a duration of the second transmit time interval is an integral multiple of a duration of the first transmit time interval.

11. The method of claim 1, wherein a duration of the second frame is an integral multiple of a duration of the first frame.

12. The method of claim 1, wherein the first data frame includes a plurality of slots, each slot having the first transmit time interval, and wherein a first symbol in time of each slot of the plurality of slots includes a pilot signal.

13. A wireless communication system, comprising:
first transceiver for establishing a wireless backhaul link to communicate by a first data frame having a first transmit time interval with a second wireless transceiver; and
third transceiver for establishing a wireless access link to communicate by a second data frame having a second transmit time interval different from the first transmit time interval with a fourth wireless transceiver, wherein the backhaul link and the access link share the same frequency resources and the first and second data frames are slot location and/or slot format compatible.

## Patentansprüche

1. Verfahren zum Betreiben eines drahtlosen Kommunikationssystems, umfassend:
Kommunikation über eine drahtlose Backhaul-Verbindung durch einen ersten Datenrahmen mit einem ersten Übertragungszeitintervall mit einem ersten drahtlosen Transceiver; und
Kommunizieren über eine drahtlose Zugriffsverbindung durch einen zweiten Datenrahmen mit einem zweiten Übertragungszeitintervall, das sich von dem ersten Übertragungszeitintervall unterscheidet, mit einem zweiten drahtlosen Transceiver, wobei die Backhaul-Verbindung und die Zugriffsverbindung die gleichen Frequenzressourcen teilen und der erste und der zweite Datenrahmen mit dem Schlitzort und/oder dem Schlitzformat kompatibel sind.

2. Verfahren nach Anspruch 1, umfassend das Übertragen von Daten zwischen dem ersten Datenrahmen und dem zweiten Datenrahmen.

3. Verfahren nach Anspruch 1, wobei der erste Datenrahmen eine Vielzahl von Schlitzen beinhaltet, wobei jeder Schlitz das erste Übertragungszeitintervall und eine entsprechende Vielzahl von Symbolen aufweist, und wobei ein Transportblock mit Daten für einen einzelnen Benutzer in aufeinanderfolgende Symbole eines Schlitzes der Vielzahl von Schlitzen gemappt wird; wobei optional die aufeinanderfolgenden Symbole unterschiedliche entsprechende Zuordnungsgrößen beinhalten.

4. Verfahren nach Anspruch 1, wobei der erste Datenrahmen eine Vielzahl von Schlitzen beinhaltet, wobei jeder Schlitz das erste Übertragungszeitintervall und eine entsprechende Vielzahl von Symbolen aufweist, und wobei ein erster Teil jedes Symbols eine semi-persistente Zuordnung ist und ein zweiter Teil jedes Symbols eine dynamische Zuordnung ist.

5. Verfahren nach Anspruch 4, wobei die semi-persistente Zuordnung durch eine dedizierte Nachricht in einem gemeinsam genutzten physikalischen Datenkanal (PDSCH) kommuniziert wird.

6. Verfahren nach Anspruch 1, umfassend:
Kommunizieren durch den ersten Datenrahmen mit dem ersten drahtlosen Transceiver zu einem ersten Zeitpunkt; und
Kommunizieren, synchron mit dem ersten Datenrahmen, mit dem zweiten drahtlosen Transceiver zum ersten Zeitpunkt durch einen dritten Datenrahmen mit dem zweiten Übertragungszeitintervall.

7. Verfahren nach Anspruch 6, wobei der Schritt des Kommunizierens durch den ersten Datenrahmen ein Uplink oder ein Downlink ist: und wobei der Schritt des Kommunizierens, synchron mit dem ersten Datenrahmen, mit dem zweiten drahtlosen Transceiver ein Uplink oder ein Downlink ist.

8. Verfahren nach Anspruch 6, wobei der erste und der dritte Datenrahmen eine gleiche Frequenzressource verwenden.

9. Verfahren nach Anspruch 1, Kommunizieren innerhalb einer drahtlosen Bandbreite, wobei:
der Schritt des Kommunizierens über eine drahtlose Backhaul-Verbindung ferner umfasst: Kommunizieren durch ein Uplink oder ein Downlink mit dem ersten drahtlosen Transceiver durch den ersten Datenrahmen mit dem ersten Übertragungszeitintervall zu einem ersten Zeitpunkt unter Verwendung einer ersten Frequenzressource der Bandbreite; und
der Schritt des Kommunizierens über eine drahtlose Zugriffsverbindung ferner umfasst: Kommunizieren durch ein Uplink oder Downlink mit dem zweiten drahtlosen Transceiver durch den zweiten Datenrahmen, der das zweite Übertragungszeitintervall hat, das sich von dem ersten Übertragungszeitintervall zum ersten Zeitpunkt unterscheidet, unter Verwendung einer zweiten Frequenzressource der Bandbreite.

10. Verfahren nach Anspruch 1, wobei eine Dauer des zweiten Übertragungszeitintervalls ein ganzzahliges Vielfaches einer Dauer des ersten Übertragungszeitintervalls ist.

11. Verfahren nach Anspruch 1, wobei eine Dauer des zweiten Rahmens ein ganzzahliges Vielfaches einer Dauer des ersten Rahmens ist.

12. Verfahren nach Anspruch 1, wobei der erste Datenrahmen eine Vielzahl von Schlitzen enthält, wobei jeder Schlitz das erste Übertragungszeitintervall aufweist, und wobei ein erstes zeitliches Symbol jedes Schlitzes der Vielzahl von Schlitzen ein Pilotsignal beinhaltet.

13. Drahtloses Kommunikationssystem umfassend:
einen ersten Transceiver zum Aufbau einer drahtlosen Backhaul-Verbindung, um über einen ersten Datenrahmen mit einem ersten Übertragungszeitintervall mit einem zweiten drahtlosen Transceiver zu kommunizieren; und
einen dritten Transceiver zum Aufbau einer drahtlosen Zugriffsverbindung, um über einen zweiten Datenrahmen mit einem zweiten Übertragungszeitintervall, das sich von dem ersten Übertragungszeitintervall unterscheidet, mit einem vierten drahtlosen Transceiver zu kommunizieren, wobei die Backhaul-Verbindung und die Zugriffsverbindung die gleichen Frequenzressourcen teilen und der erste und der zweite Datenrahmen mit dem Schlitzort und/oder dem Schlitzformat kompatibel sind.

## Revendications

1. Procédé de fonctionnement d'un système de communication sans fil, comprenant :
une communication sur une liaison terrestre sans fil par une première trame de données ayant un premier intervalle temporel de transmission avec un premier émetteur-récepteur sans fil ; et
une communication sur une liaison d'accès sans fil par une deuxième trame de données ayant un second intervalle temporel de transmission différent du premier intervalle temporel de transmission avec un deuxième émetteur-récepteur sans fil, dans lequel la liaison terrestre et la liaison d'accès partagent les mêmes ressources de fréquence et les première et deuxième trames de données sont un emplacement de fente et/ou un format de fente compatible.

2. Procédé selon la revendication 1, comprenant un transfert de données entre la première trame de données et la deuxième trame de données.

3. Procédé selon la revendication 1, dans lequel la première trame de données inclut une pluralité de fentes, chaque fente ayant le premier intervalle temporel de transmission et ayant une pluralité de symboles respectifs, et dans lequel un bloc de transport ayant des données pour un utilisateur unique est mis en correspondance dans des symboles consécutifs d'une fente de la pluralité de fentes ; les symboles consécutifs incluant en option différentes tailles d'attribution respectives.

4. Procédé selon la revendication 1, dans lequel la première trame de données inclut une pluralité de fentes, chaque fente ayant le premier intervalle temporel de transmission et ayant une pluralité de symboles respectifs, et dans lequel une première partie de chaque symbole est une attribution semi-permanente et une seconde partie de chaque symbole est une attribution dynamique.

5. Procédé selon la revendication 4, dans lequel l'attribution semi-permanente est communiquée à travers un message dédié dans un canal partagé de données physique (PDSCH).

6. Procédé selon la revendication 1, comprenant :
la communication par la première trame de données avec le premier émetteur-récepteur sans fil à un premier temps ; et
la communication, en synchronisation avec la première trame de données, avec le deuxième émetteur-récepteur sans fil au premier temps par une troisième trame de données ayant le second intervalle temporel de transmission.

7. Procédé selon la revendication 6, dans lequel l'étape de communication par la première trame de données est l'une d'une liaison montante et d'une liaison descendante, et dans lequel l'étape de communication, en synchronisme avec la première trame de données, avec le deuxième émetteur-récepteur sans fil est ladite une liaison d'une liaison montante et d'une liaison descendante.

8. Procédé selon la revendication 6, dans lequel les première et troisième trames de données utilisent une même ressource de fréquence.

9. Procédé selon la revendication 1, communiquant dans une bande passante sans fil, dans lequel :
l'étape de communication sur une liaison terrestre sans fil comprenant en outre : la communication par l'une d'une liaison montante et d'une liaison descendante avec le premier émetteur-récepteur sans fil par la première trame de données ayant le premier intervalle temporel de transmission à un premier temps à l'aide d'une première ressource de fréquence de la bande passante ; et
l'étape de communication sur une liaison d'accès sans fil comprenant en outre : la communication par ladite une liaison d'une liaison montante et d'une liaison descendante avec le deuxième émetteur-récepteur sans fil par la deuxième trame de données ayant le second intervalle temporel de transmission différent du premier intervalle temporel de transmission au premier temps à l'aide d'une seconde ressource de fréquence de la bande passante.

10. Procédé selon la revendication 1, dans lequel une durée du second intervalle temporel de transmission est un multiple entier d'une durée du premier intervalle temporel de transmission.

11. Procédé selon la revendication 1, dans lequel une durée de la deuxième trame est un multiple entier d'une durée de la première trame.

12. Procédé selon la revendication 1, dans lequel la première trame de données inclut une pluralité de fentes, chaque fente ayant le premier intervalle temporel de transmission, et dans lequel un premier symbole dans le temps de chaque fente de la pluralité de fentes inclut un signal pilote.

13. Système de communication sans fil, comprenant :
un premier émetteur-récepteur permettant d'établir une liaison terrestre sans fil pour communiquer par une première trame de données ayant un premier intervalle temporel de transmission avec un deuxième émetteur-récepteur sans fil ; et
un troisième émetteur-récepteur permettant d'établir une liaison d'accès sans fil pour communiquer par une deuxième trame de données ayant un second intervalle temporel de transmission différent du premier intervalle temporel de transmission avec un quatrième émetteur-récepteur sans fil, dans lequel la liaison terrestre et la liaison d'accès partagent les mêmes ressources de fréquence et les première et
deuxième trames de données sont une localisation de fente et/ou un format de fente compatible.
